# EUROPEAN PATENT APPLICATION

(11) **EP 3 389 170 A1**
(43) Date of publication of application: **17.10.2018**
(21) Application number: 17166031.9
(22) Date of filing: 11.04.2017
(51) Int. Cl.: H02K 23/02

(54) **ELECTRIC MOTOR**

(71) Applicant: Mahle International GmbH, 70376 Stuttgart (DE)
(72) Inventor: FURLAN, Martin, 5271 Vipava (SI)
(74) Representative: BRP Renaud & Partner mbB Rechtsanwälte Patentanwälte Steuerberater

(57) **Abstract**

The present invention relates to an electric motor (1), in particular for a motor vehicle (2), comprising a stator (3) which has a plurality of uniform pole bodies (5) distributed in the circumferential direction (6), and a rotor (4) which has at least a plurality of uniform rotor teeth (8) which define an equal number of uniform rotor slots (9).

It is essential to the invention that at least one such pole body (5) of the stator (3) is displaced in the circumferential direction by an angle (ϕⁿ) with respect to a symmetrical distribution in the circumferential direction (6).

## Description

The present invention relates to an electric motor having the features of the preamble of claim 1. In addition, the invention relates to an electric machine which has such an electric motor.

During operation of electric motors, vibrations and noise occur due to different causes, which it is desirable to minimize. The vibrations or oscillations and noise of such an electric motor are attributable to a number of different forces which occur during operation. Substantially electromagnetic forces and mechanical forces occur. In the case of electromagnetic forces which produce vibrations, these are harmonic vibrations which are substantially caused by pendulum vibrations of the rotor. During rotation of the rotor the magnetic field between the rotor and the stator of the electric motor varies. As a result of the variation of the magnetic field, varying magnetic forces occur which act both on the rotor and on the stator. For electric motors in which the stator is arranged on the outside, the noise is emitted by an outer lateral surface of the stator. The magnetic forces acting on the rotor are negligible in this case. The magnetic forces can occur, for example due to non-uniform distances between the rotor and the stator which can be transmitted by the bearings of the rotor. Magnetic noise in electric motors is attributed on the one hand to varying vibration amplitudes and on the other hand to the forces acting on the rotor and the stator during operation. Furthermore, mechanical and electrical properties of the rotor and the stator influence the magnetic forces such as, for example, the size, the shape, the number of rotor slots, the number of pole bodies of the stator, the eccentricity of air gaps, the precision of the windings of the rotor and/or the stator and generally on the currents flowing in the electric motor. The mechanical forces that can occur during the operation of electric motors include for example vibrations transmitted to the shaft by ball bearings and/or unbalances of the individual components of the electric motor, which are created through in most cases unavoidable manufacturing tolerances. Decreasing manufacturing tolerances would result in overproportionately high costs.

In order to reduce such vibrations and noise, on the one hand the excitation forces during operation of the electric motor can be reduced or on the other hand the strength or the damping properties of the electric motor can be accordingly advantageously increased. The increase in the strength or stiffness of the materials of which the electric motor is composed can result in an effective reduction of vibrations and noise in the event that the rotational speed or the motor frequency is relatively constant. In the case of a variable rotational speed or motor frequencies on the other hand, the varying magnetic and mechanical forces of resonant bodies connected to the electric motor can only be kept away from the motor as such with some difficulty.

It is known that the damping of the structure of the electric motor constitutes the most trivial solution in some cases. The damping can be achieved whereby in particular components of the electric motor which are shaken by vibrations to an increased extent are made of materials which per se have a high intrinsic damping. A problem associated with replacing or changing the component materials of the electric motor is that those component materials should also meet other requirements such as, for example, a suitable stiffness or strength, a load-bearing capacity as required, a corresponding temperature resistance and an advantageous magnetic characteristic.

Derived from this, the idea according to the invention to reduce vibrations and noise during operation of electric motors relates to a solution in which the geometrical dimensions of the electric motor are retained and a reduction of vibrations and noise is only established by an advantageous configuration or arrangement of the inner components of the electric motor. The known prior art for this is explained in detail hereinafter.

Known from US 3 546 504 A and DE 1 613 283 A1 is an arrangement for preventing resonance vibrations of individual components formed as a result of electromagnetic and/or mechanically excited vibration and for preventing the emission of airborne and structure-borne sound from individual components of a housingless miniature electric motor of elongated design. All the structural elements of the motor which merely have a supporting or cohesive function and which either vibrate themselves or can be excited to co-vibrate or to resonance vibrations by the vibrations occurring during operation of the motor are formed from a material having an extremely high intrinsic damping. It further follows from the entire documents that those parts of the motor which can only be made of a material having low intrinsic damping for mechanical or electrical reasons and which emit vibrations are separated from neighbouring components by a layer consisting of vibration-damping material.

A disadvantage with the present prior art is that with reference to electric motors, the focus is on the damping of the structure of the electric motor. In the event that the magnetic forces in the electric motor are more strongly defined than the mechanical forces and can thus be designated as dominant forces, it is in particular necessary to explicitly reduce the magnetic forces which set the stator in vibration.

The present invention is therefore concerned with the problem of providing for an electric motor of the previously described type or for a combination fitted therewith, an improved or at least a different embodiment which is characterized by a reduction of vibrations and noise and in particular can be manufactured inexpensively by means of a simple production process.

This problem is solved according to the invention by the subject matter of the independent claims. Advantageous embodiments are the subject matter of the dependent claims.

The invention is based on the general idea in an electric motor, in particular for a motor vehicle, to arrange at least one pole body of the stator displaced in such a manner in the circumferential direction with respect to a symmetrical arrangement of the pole body that regions of action of the respective pole body have a same number of rotor teeth or rotor slots respectively a same shape of air gaps. This has the positive effect that deviations between the magnetic forces coming from the rotor and magnetic forces caused by the stator are brought into phase. That is to say that the vibration amplitudes caused by the magnetic forces are displaced with respect to one another in a harmonic ratio. A phase difference between the respective magnetic forces of the rotor and the stator is therefore avoided or at least reduced as a result of the displacement of the pole bodies of the stator. To this end, the electric motor according to the invention has a stator which is at least formed from a plurality of uniformly configured pole bodies. In addition, the electric motor has a rotor which has at least a plurality of uniform rotor teeth which define an equal number of uniform rotor slots. At least one such pole body of the stator is displaced in the circumferential direction by an angle compared with a symmetrical distribution of the pole bodies in the circumferential direction.

For the invention, it is unessential whether the rotor or the stator is arranged externally or internally. The invention can thus be applied as an inside runner motor or an external rotor motor. For the sake of simplicity, only one construction is explained in more detail below. The exemplary illustrated electric motor has an external stator which has a plurality of such uniform pole bodies distributed in the circumferential direction and an internal rotor which is rotatably mounted about an axis of rotation relative to the external stator and has at least a plurality of such uniform rotor teeth which define the equal number of the uniform rotor slots.

In an advantageous embodiment, the stator has an even number of pole bodies and the rotor has an odd number of rotor teeth or rotor slots. In symmetrically configured electric motors in which the number of rotor teeth or the number of rotor slots is an integer multiple of the number of pole bodies of the stator, the idea according to the invention in which the magnetic forces of the rotor and the stator are brought into phase cannot be applied since these are already in phase due to the symmetry. Rather, the invention relates to asymmetrically configured electric motors in which the number of rotor teeth or the number of rotor slots does not correspond to an integer multiple of the pole body of the stator.

In principle, the pole bodies of the stator have regions of action which describe a region in which the rotor as such is excited or in which the rotor and the stator are in operative connection with one another. Advantageously these regions of action of the pole bodies of the stator each cover the same circumferential sections of the rotor in all feasible relative positions. That is, the respective regions of action of the pole bodies each comprise an identical region of the rotor, in particular an identical circumferential section with the same number of rotor teeth and rotor slots relative to the rotational position of the rotor.

In a further advantageous embodiment the pole bodies are arranged displaced with respect to a symmetrical arrangement in the circumferential direction in such a manner that mirror planes of the uniform pole bodies are each facing regions of the rotor which are identically configured in all relative positions of the rotor. If, for example, a rotor tooth lies in a line to the mirror plane of a pole body, all further pole bodies are displace in such a manner so that all mirror planes of the pole bodies lie in a line to a respective rotor tooth. Furthermore, this means that the respective regions of action of the pole bodies of the stator each comprise a same region of the rotor. In case that the pole bodies are not uniform, there is also the possibility to define equal reference points or reference planes which also each facing regions of the rotor which are identically configured in all relative positions of the rotor.

In a further advantageous embodiment the pole bodies are arranged displaced with respect to a symmetrical arrangement in the circumferential direction in such a manner that the respective angles of the displacement are the smallest possible in relation to the same number of rotor teeth or rotor slots in the regions of action of the pole bodies. Thus, the displacement of the pole bodies is a maximum of half or less than a width of a rotor tooth or a rotor slot pitch. With other words the displacement of the pole bodies is a maximum of half or less than an angle between two rotor slots or rotor tooth. The degree of displacement of the pole bodies should be kept as small as possible in view of a non-uniform torque profile of the electric motor accompanying the displacement.

In a possible further development of the idea according to the invention in which the number of pole bodies of the stator and the number of rotor teeth or rotor slots of the rotor is the same or a multiple of the respective other, and at least one such pole body is displaced by an angle with respect to a symmetrical distribution in the circumferential direction so that at least two regions of action of the pole bodies have a different number of rotor teeth or rotor slots respectively a same shape of air gaps, it was surprisingly found that when fitted with two pole bodies and an odd number of rotor teeth or rotor slots, an asymmetric arrangement of the pole bodies in the circumferential direction results in a reduction of vibrations. In this case, at least one of the two pole bodies is displaced by an angle with respect to the symmetrical distribution in the circumferential direction so that the displaced pole body in the region of one mirror plane for example has a rotor slot and the other pole body in this relative position of the rotor has a rotor tooth in the region of its mirror plane.

Expediently such a pole body of the stator is formed with a permanent magnet or with an electromagnetic exciter coil. In addition, at least one such electromagnetic exciter coil can be provided with a pole shoe. The pole shoe with at least one such electromagnetic exciter coil forms the pole body of the stator.

In a preferred embodiment the pole bodies of the stator are in direct contact with a housing of the stator which acts as yoke.

In a preferred embodiment, an electric machine according to the invention, in particular for a motor vehicle, is fitted with such an electric motor.
It should be said that a possible non-uniform torque profile due to the displacement of the pole bodies of the stator is deliberately accepted within the framework of the invention. Expediently the displacement of the pole bodies of the stator is kept as small as possible according to the invention. The pole bodies of the stator should be displaced in such a manner that they are arranged in phase at the nearest possible point.

Further important features and advantages of the invention are obtained from the subclaims, from the drawings and from the relevant description of the figures with reference to the drawings.

It is understood that the aforesaid features and those to be explained hereinafter can be used not only in the combination specified in each case but also in other combinations or alone without departing from the framework of the present invention.

Preferred exemplary embodiments of the invention are presented in the drawings and are explained in detail in the following description where the same reference numbers refer to the same or similar or functionally the same components.

In the drawings, in each case schematically,
- Fig. 1: shows a sectional view of an electric motor with an asymmetric arrangement of four pole bodies of the stator in the circumferential direction
- Fig. 2: shows a sectional view of an electric motor known from the prior art with four symmetrically arranged pole bodies of the stator in the circumferential direction,
- Fig. 3: shows a sectional view of an electric motor with two pole bodies of the stator arranged symmetrically in the circumferential direction,
- Fig. 4: shows a sectional view of the electric motor from Fig. 3 as an embodiment with a pole body of the stator displaced in the circumferential direction,
- Fig. 5: shows a sectional view of an electric motor with an even number of rotor teeth or rotor slots and a symmetrical arrangement of two pole bodies of the stator in the circumferential direction,
- Fig. 6: shows a sectional view of the electric motor from Fig. 5 with a pole body of the stator displaced in the circumferential direction.

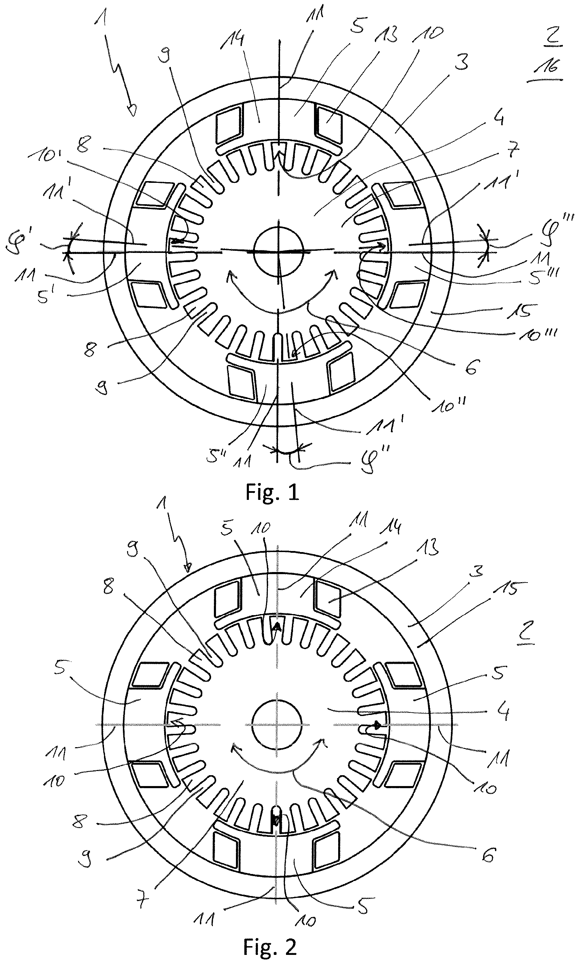

Figure 1 shows a sectional view of an electric motor 1, in particular for a motor vehicle 2 not otherwise shown which has an external stator 3. In this embodiment the external stator 3 is configured with four uniform pole bodies 5, 5', 5", 5"'. The pole bodies 5, 5', 5", 5"' are each formed with an electromagnetic exciter coil 13 and a pole shoe 14 and are in direct contact with a housing 15 of the stator 3 acting as yoke, Furthermore, the electric motor 1 has an internal rotor 4 which is mounted rotationally adjustably about an axis of rotation relative to the external stator 3. The rotor 4 can preferably be formed with an armature sheet stack 7 which has an uneven number of rotor teeth 8 which defines an uneven number of rotor slots 9. The term "defined" should be understood in the present context so that respectively two adjacent rotor teeth 8 in the circumferential direction 6 are separated from one another by a rotor slot 9. Such a pole body 5 of the stator 3 retains its original positioning which corresponds to a symmetrical distribution of all the pole bodies 5, 5', 5", 5"' in the circumferential direction. The pole body 5 located in the symmetrical position has a defined number of rotor teeth 8 or rotor slots 9 in a region of action 10 of the pole body 5. In the example of Fig. 1, precisely five rotor teeth 8 and precisely six rotor slots 9 are in the region of action 10. This defined number of rotor teeth 8 and rotor slots 9 which abut in the region of action of the pole body 5 forms a reference value for the magnetic regions of action 10', 10", 10"' of the displaced pole bodies 5', 5", 5"'. According to the invention, each individual pole body 5, 5', 5", 5"' of the stator 3 has the same number of rotor teeth 8 or rotor slots 9 in its regions of action 10, 10', 10", 10"'. To this end the pole bodies 5', 5", 5"' are each arranged displaced by an angle ϕ', ϕ", ϕ"' with respect to a symmetrical arrangement in the circumferential direction 6. The pole bodies 5', 5", 5"' are furthermore arranged displaced with respect to the rotor 4 in such a manner that mirror planes 11' of the pole bodies 5', 5", 5'" are each facing regions of the rotor 4 which are configured identically in all relative positions of the rotor 4. In this figure for the depicted relative position of the rotor 4, respectively one rotor tooth 8 lies in a line to the mirror planes 11' of the pole bodies 5', 5", 5"'. The angles ϕ', ϕ", ϕ"' describe an offset of the mirror planes 11' of the displaced pole bodies 5', 5", 5"' with respect to the mirror planes 11 of the pole bodies 5', 5", 5"' with a symmetrical arrangement in circumferential direction 6.

In the previously described arrangement between the mirror planes 11' of the displaced pole bodies 5', 5", 5"' with respect to the rotor 4, the respective angle ϕ', ϕ", ϕ"' which describes the degree of displacement is the smallest possible in relation to an equal number of rotor slots 9 in the regions of action 10', 10", 10"' of the displaced pole bodies 5', 5", 5"'.

An electric machine 16 not shown can be fitted with an electric motor 1 of the previously described type and the previously described features.

Figure 2 shows a sectional view of a conventional electric motor 1 not according to the invention with four pole bodies 5 of the stator 3 arranged symmetrically with respect to one another in circumferential direction 6. In this arrangement of the pole bodies 5 the regions of action 10 of the pole bodies 5 each have a different number of rotor teeth 8 or a different number of rotor slots 9 of the rotor 4.

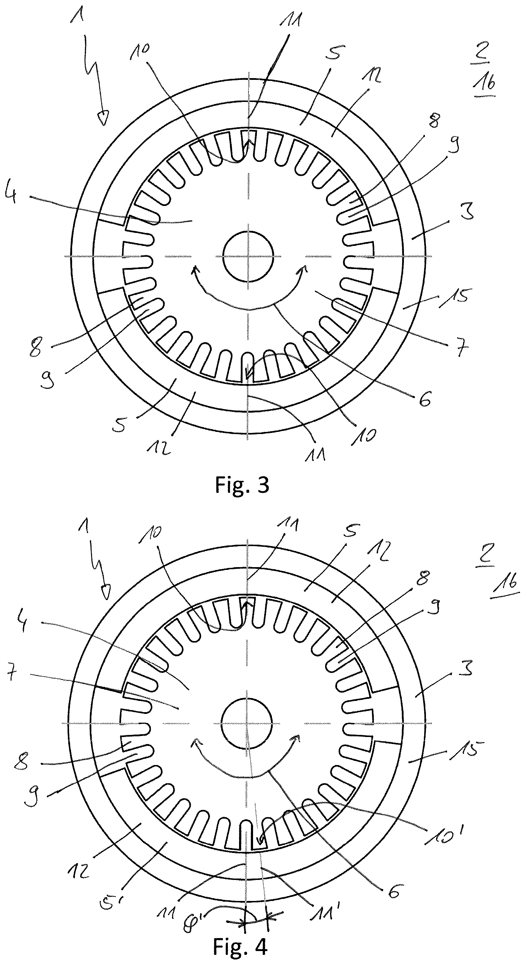

Figure 3 shows a sectional view of an electric motor 1 in an embodiment with two pole bodies 5 of the stator 3 arranged symmetrically in the circumferential direction 6. The pole bodies 5 are formed with permanent magnets 12 and are in direct contact with a housing 15 of the stator 3 acting as yoke. As a result of an uneven number of rotor teeth 8 or rotor slots 9 of the armature sheet stack 7 of the rotor 4, as a result of the symmetrical arrangement of the pole bodies 5, in each case a different number of rotor teeth 8 or rotor slots 9 is located in the respective regions of action 10 of the pole bodies.

Figure 4 shows a sectional view of the electric motor 1 from Fig. 3, wherein at least one pole body 5' of the stator 3 is displaced in circumferential direction 6. The pole body 5' is displaced by an angle ϕ' to such an extent that a mirror plane 11' of the displaced pole body 5' has a region of the rotor 4 in the direction of the rotor 4 which is formed the same as a region of the rotor 4 facing a mirror plane 11 of the pole body 5 located in a symmetrical position. According to the invention, both pole bodies 5, 5' of the stator 3 have a same number of rotor teeth 8 or rotor slots 9 in the regions of action 10, 10' thereof.

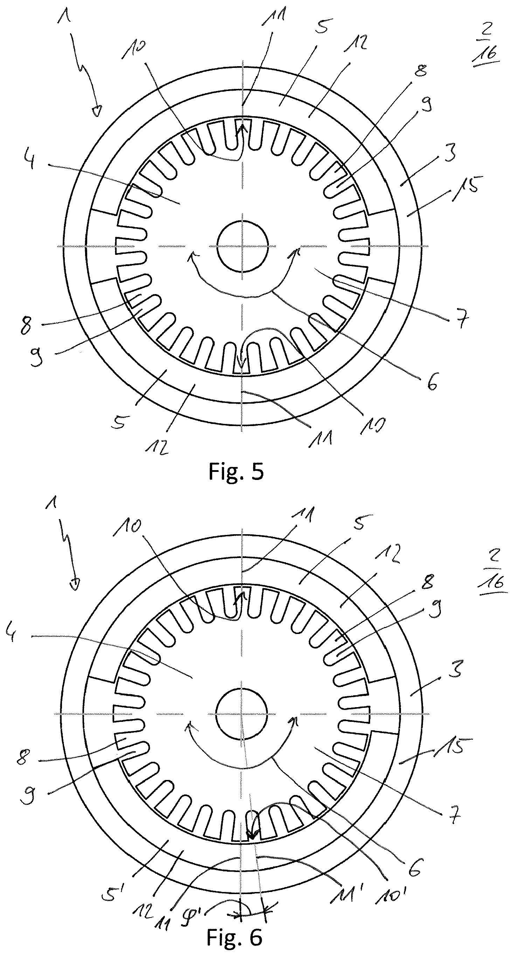

Figure 5 shows a sectional view of an embodiment of an electric motor 1 with an even number of rotor teeth 8 or an even number of rotor slots 9 thereby defined and a symmetrical arrangement of two pole bodies 5 of the stator in circumferential direction 6. The respective regions of action 10 of the pole bodies 5 have the same number of rotor teeth 8 or rotor slots 9 of the rotor 4 in this variant without any displacement.

Figure 6 shows a sectional view of the electric motor 1 from Fig. 5 with a pole body 5' of the stator 3 displaced in circumferential direction 6. A pole body 5' is displaced in such a manner that the mirror plane 11' of the pole body 5' is facing a region of the rotor 4 which initially differs from a region of the rotor 4 which is faced by the mirror plane 11 of the pole body 5 located in a symmetrical position. The mirror plane 11 of the symmetrically positioned pole body 5 is orthogonal in a line to a central line of a rotor tooth 8. The displaced pole body 5' is arranged displaced by an angle ϕ' so that the mirror plane 11' of the pole body 5' is radially in a line with a nearest central line of such a rotor slot 9 of the rotor 4. In other words, the displaced pole body 5' of the stator 3 has a rotor slot 9 at the positions in the region of action 10' where the originally positioned pole body 5 in the region of action 10 thereof has a rotor tooth 8 for example and where a rotor slot 9 abuts, a rotor tooth 8 abuts in the region of action 10' of the pole body 5'.****

## Claims

1. Electric motor (1), in particular for a motor vehicle (2) comprising:
- a stator (3) which has a plurality of uniform pole bodies (5) distributed in the circumferential direction (6),
- a rotor (4) which has at least a plurality of uniform rotor teeth (8) which define an equal number of uniform rotor slots (9),
**characterized in,**
- **that** at least one such pole body (5) is displaced in circumferential direction (6) by an angle (ϕⁿ) with respect to a symmetrical distribution of all pole bodies (5) in the circumferential direction (6).

2. The electric motor according to claim 1,
**characterized in,**
**that** the stator (3) has an even number of pole bodies (5) and the rotor (4) has an odd number of rotor teeth (8) or rotor slots (9).

3. The electric motor according to claim 1 or 2,
**characterized in,**
**that** the pole bodies (5) of the stator (3) have regions of action (10) which cover the same circumferential sections of the rotor (4) in corresponding relative positions.

4. The electric motor according to claim 3,
**characterized in,**
**that** the regions of action (10) of the pole bodies (5) comprise the same number of rotor teeth (8) or rotor slots (9) of the rotor (4).

5. The electric motor according to any one of claims 1 to 4,
**characterized in,**
**that** the pole bodies (5) are arranged displaced in the circumferential direction with respect to a symmetrical arrangement in the circumferential direction in such a manner that mirror planes (11) of the pole bodies (5) are each facing regions of the rotor (4) which are identically configured in all relative positions of the rotor (4).

6. The electric motor according to any one of claims 1 to 5,
**characterized in,**
**that** the pole bodies (5) are arranged displaced in the circumferential direction with respect to a symmetrical arrangement in the circumferential direction in such a manner that the angles (ϕⁿ) of the displacement are the smallest possible in relation to the same number of rotor teeth (8) or rotor slots (9) in the regions of action (10) of the pole bodies (5).

7. The electric motor according to any one of claims 1 to 6,
**characterized in,**
**that** at least one such pole body (5) of the stator (3) is formed with a permanent magnet (12) or with an electromagnetic exciter coil (13).

8. The electric motor according to claim 7,
**characterized in,**
**that** at least one such permanent magnet (12) or at least one such electromagnetic excited coil (13) with a pole shoe (14) is provided, wherein at least one such permanent magnet (12) or at least one such electromagnetic exciter coil (13) with such a pole shoe (14) forms the pole body (5) of the stator (3).

9. The electric motor according to any one of claims 1 to 8,
**characterized in,**
**that** the pole bodies (5) of the stator (3) are in direct contact with a housing (15) of the stator (3) which acts as yoke.

10. Electric machine (16),
**characterized in,**
**that** the electric machine (16) comprises at least one such electric motor (1) which is configured according to any one of the previously described claims.
